(19) Europäisches Patentamt

European Patent Office

Office européen des brevets

(11) **EP 1 150 250 B1**

(12) **FASCICULE DE BREVET EUROPEEN**

(45) Date de publication et mention
de la délivrance du brevet:
**01.09.2004  Bulletin 2004/36**

(51) Int Cl.⁷: **G06T 9/20**, H04N 7/26,
G06T 7/20, H04L 27/34

(21) Numéro de dépôt: **01401094.6**

(22) Date de dépôt: **27.04.2001**

(54) **Procédé d'encodage temporel d'une pluralité d'informations pouvant être représentées par des vecteurs**

Verfahren um Informationen zu kodieren, die von Vektoren representiert werden können

Method of encoding information which can be represented by vectors

(84) Etats contractants désignés:
**CH DE FR GB LI SE**

(30) Priorité: **27.04.2000  CH 8292000**

(43) Date de publication de la demande:
**31.10.2001  Bulletin 2001/44**

(73) Titulaire: **CSEM**
**Centre Suisse d'Electronique et de Microtechnique S.A. - Recherche et Développement**
**2007 Neuchâtel (CH)**

(72) Inventeurs:
 • **Burgi, Pierre-Yves**
 **1205 Geneve (CH)**
 • **Heitger, Friedrich**
 **3004 Berne (CH)**
 • **Barbaro, Massimo**
 **09127 Cagliari (IT)**

 • **Mortara, Alessandro**
 **1004 Lausanne (CH)**

(74) Mandataire: **Caron, Gérard et al**
**Cabinet JP Colas**
**37 avenue Franklin D. Roosevelt**
**75008 Paris (FR)**

(56) Documents cités:
**WO-A-96/10163          DE-A- 19 821 974**
**FR-A- 2 778 994          US-A- 4 747 150**

 • **MORTARA A ET AL: "A COMMUNICATION SCHEME FOR ANALOG VLSI PERCEPTICE SYSTEMS" IEEE JOURNAL OF SOLID-STATE CIRCUITS,US,IEEE INC. NEW YORK, vol. 30, no. 6, 1 juin 1995 (1995-06-01), pages 660-669, XP000510117 ISSN: 0018-9200**
 • **PATENT ABSTRACTS OF JAPAN vol. 1995, no. 04, 31 mai 1995 (1995-05-31) & JP 07 030100 A (MATSUSHITA ELECTRON CORP), 31 janvier 1995 (1995-01-31)**

**Description**

La présente invention est relative à un procédé d'encodage temporel d'une pluralité d'informations pouvant être représentées par des vecteurs ayant chacun une magnitude et une orientation données, lesdites informations étant relevées par une pluralité de capteurs.

Un tel procédé peut trouver une application notamment dans le domaine du traitement d'images dans lequel il permet de déterminer la direction et l'amplitude de transitions locales, ou gradients spatiaux, des luminances captées par un réseau de photorécepteurs. Dans ce cas, la magnitude du vecteur peut représenter le contraste local non normalisé de l'image.

Cependant cette application spécifique de l'invention doit être considérée comme nullement limitative. Par exemple, le procédé selon l'invention peut également être utilisé pour examiner les vitesses de mouvements d'objets, les informations de vitesse étant alors relevées par des capteurs appropriés.

Dans le cas du traitement d'images, la détermination des gradients spatiaux dans de telles applications est réalisée classiquement en effectuant une convolution de l'image à l'aide de kernels de convolution. Cependant, si les gradients doivent être déterminés pour une pluralité de directions, il faut utiliser autant de kernels de convolution, ce qui suppose une puissance de calcul considérable. Une telle méthode n'est donc guère compatible avec le traitement d'images captées par un réseau de photorécepteurs, d'une part, en raison du temps qu'il faut pour effectuer les calculs et d'autre part, parce que la taille importante du circuit nécessaire ne cadre pas avec la taille du réseau de photorécepteurs.

L'invention a pour but de fournir un procédé d'encodage d'informations permettant de remédier aux inconvénients qui viennent d'être évoqués et qui procure une rapidité de traitement compatible avec une analyse des informations en temps réel.

Elle a donc pour objet un procédé tel que défini en préambule qui est caractérisé en ce qu'il consiste:

- à transformer chaque information relevée en un signal sinusoïdal dont l'amplitude maximale représente la magnitude du vecteur qui représente cette information et dont la phase représente l'angle de ce vecteur;
- à détecter ladite amplitude maximale;
- à comparer cette amplitude maximale à un signal en forme de rampe décroissante et à engendrer une première impulsion, lorsque le signal en forme de rampe est égal à l'amplitude maximale;
- à engendrer une seconde impulsion, lorsque ladite fonction sinusoïdale passe par une valeur nulle après la génération de ladite première impulsion;
- lesdites première et seconde impulsions formant, par leur position dans le temps, un encodage temporel de la magnitude et de l'angle dudit vecteur et donc, de ladite information.

Grâce à ces caractéristiques, le procédé d'encodage ne nécessite que très peu de calcul et fournit un encodage temporel qui peut facilement être exploité.

Le procédé de l'invention présente, en outre, l'avantage de pouvoir être mis en oeuvre moyennant une implémentation simple, ce qui est particulièrement important dans le cas où les capteurs sont implémentés sous la forme d'un circuit intégré, chaque capteur pouvant alors être placé à côté de son propre circuit d'exploitation qui est lui-même également intégré.

Le procédé selon l'invention peut également présenter les particularités suivantes:

- ladite pluralité d'informations est fournie par des capteurs agencés en réseau, et ledit signal sinusoïdal est le résultat de l'information d'un capteur combinée aux informations des capteurs voisins modulées par une même fonction sinusoïdale par rapport au temps dont l'amplitude et la phase constituent la pondération des capteurs voisins dans ladite combinaison;
- la pondération est déterminée en fonction de l'emplacement des capteurs voisins par rapport au capteur considéré;
- lesdits capteurs font partie d'un réseau matriciel;
- lesdits capteurs comprennent des éléments photosensibles,
- la pluralité des premières et secondes impulsions sont présentées simultanément sur les bords dudit réseau et codées sur un premier bus commun pour l'amplitude et sur un deuxième bus commun pour la phase, la répartition desdites impulsions sur les lignes de leur bus correspondant à l'adresse dans ledit réseau du capteur ayant donné naissance à ces impulsions et leur apparition dans le temps représentant respectivement la magnitude et l'angle du vecteur concerné;
- le procédé consiste également à modifier la pente dudit signal en forme de rampe en fonction de l'apparition dans le temps des dites premières et secondes impulsions provenant des différents capteurs.

D'autres caractéristiques et avantages de l'invention apparaîtront au cours de la description qui va suivre donnée uniquement à titre d'exemple et faite en se référant aux dessins annexés dans lesquels:

- la figure 1 est un schéma symbolique simplifié d'un réseau de capteurs et de ses circuits d'exploitation permettant de mettre en oeuvre le procédé selon l'invention;
- la figure 1A montre, dans le cadre d'un réseau de capteurs photosensibles, un exemple d'image présentant des gradients spatiaux locaux exprimés par des vecteurs V de magnitude N et d'angle $\alpha$ (phase p) donnés;
- la figure 2 est un schéma plus détaillé de l'implémentation d'un capteur du réseau de la figure 1;
- les figures 3, 4 et 6 sont des schémas de détail de plusieurs blocs du schéma de la figure 2; et
- les figures 5 et 7 sont des diagrammes illustrant le déroulement du procédé d'encodage selon l'invention.

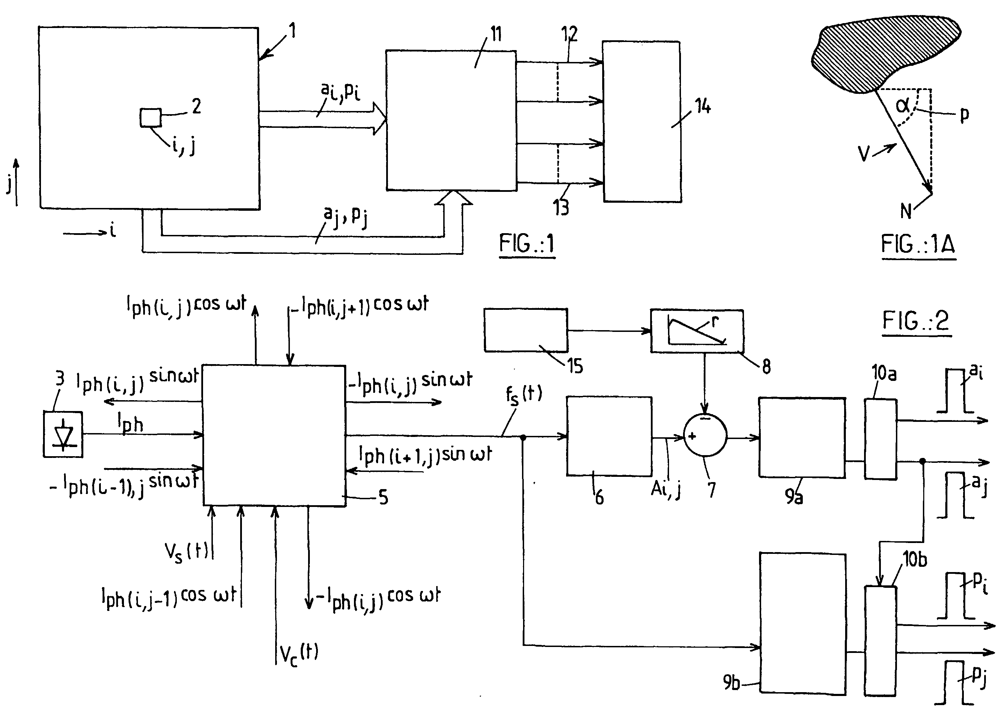

En se référant à la figure 1, on a représenté, uniquement à titre d'exemple d'application de l'invention, un réseau photosensible 1 de capteurs (ou pixels) disposés selon une matrice de 100x100 pixels, par exemple. Dans le réseau, on aperçoit un pixel 2 de coordonnées i, j ; i étant un numéro quelconque de rangée et j un numéro quelconque de colonne.

Chaque pixel 2 (figure 2) comprend un élément photosensible 3 qui engendre un courant photoélectrique $I_{ph}$ fonction de l'éclairement local du pixel 2 concerné et constituant ainsi un signal de luminance local. Cet élément photosensible 3 est connecté à un circuit de traitement 5 qui assure, au niveau du pixel considéré, le traitement du signal de luminance se présentant sous la forme du courant $I_{ph}$. Il y a donc un circuit de traitement 5 par pixel 2.

Pour effectuer son traitement, le circuit de traitement 5 reçoit des pixels voisins dans le réseau 1 des signaux pondérés en fonction de l'emplacement que ces pixels occupent dans le réseau. Ces signaux sont les suivants:

- $-I_{ph(i-1),j}\sin\omega t$ du pixel 2 de coordonnées (i-1), j
- $+I_{ph(i+1),j}\sin\omega t$ du pixel 2 de coordonnées (i+1), j
- $-I_{phi,(j+i)}\cos\omega t$ du pixel 2 de coordonnées i, (j+1)
- $+I_{ph(i,(j-1)}\cos\omega t$ du pixel 2 de coordonnées i, (j-1)

et fournit à des pixels voisins les signaux suivants:

- $+I_{ph(i,j)}\sin\omega t$ au pixel 2 de coordonnées (i-1), j
- $-I_{ph(i,j)}\sin\omega t$ au pixel 2 de coordonnées (i+1), j
- $+I_{ph(i,j)}\cos\omega t$ au pixel 2 de coordonnées i, (j+1)
- $-I_{ph(i,j)}\cos\omega t$ au pixel 2 de coordonnées i, (j-1).

Le circuit de traitement 5 effectue un calcul à partir des signaux qui lui sont appliqués selon l'expression suivante:

$$f_s(t)=(I_{ph(i+1, j)}-I_{ph(i-1, j)})\cos(2\pi\omega t)+(I_{ph(i, j+1)}-I_{ph(i, j-1)})\sin(2\pi\omega t)$$

Dans cette expression, les valeurs $\cos(2\pi\omega t)$ et $\sin(2\pi\omega t)$ sont dérivées de tensions sinusoïdales $V_c(t)$ et $V_s(t)$ appliquées en commun à tous les pixels 2. On peut donc considérer que le circuit de conversion 5 fait office d'un "filtre tournant".

La fonction sinusoïdale $f_s(t)$ est appliquée à un bloc 6 de maintien et de détection de crête, ce bloc 6 étant destiné à fournir un signal $A_{i, j}$ représentant l'amplitude maximale de la fonction $f_s(t)$. Ce signal est appliqué avec le signe + à un additionneur 7.

L'additionneur 7 reçoit avec le signe - un signal r, en forme de rampe décroissante, provenant d'un générateur de rampe 8. La notion de signal en forme de rampe doit être prise au sens large puisque, comme indiqué précédemment, sa pente peut être rendue variable. La sortie de l'additionneur 7 est connectée au bloc 9a de détection de passage par zéro. Ce bloc de détection est classique et ne sera donc pas décrit en détail. En sortie de ce bloc, une transition est engendrée lors du passage par zéro et transmise au bloc de communication 10a. Sur cette transition, ce dernier bloc délivre simultanément deux impulsions identiques $a_i$ et $a_j$ (appelées "impulsions d'amplitude" par la suite) représentant toutes deux l'amplitude maximale de la fonction ; l'une étant associée à la coordonnée i du pixel et l'autre à la coordonnée j. L'apparition simultanée des deux impulsions $a_i$ et $a_j$ à la sortie du comparateur 7 identifie donc de façon certaine le pixel qui aura été à l'origine de cette apparition.

La fonction sinusoïdale $f_s(t)$ est également appliquée à un autre détecteur de passage par zéro 9b qui détecte toutes les transitions de passage par zéro. La sortie de ce bloc 9b est connectée à un autre bloc de communication 10b qui délivre, après l'apparition des impulsions d'amplitude, une paire d'impulsions $p_i$ et $p_j$ (appelées "impulsions de phase" par la suite) associées respectivement aux deux coordonnées i et j du pixel considéré.

Les impulsions d'amplitude et de phase ainsi engendrées sont appliquées à un circuit de traitement 11 (figure 1) qui code leur apparition, respectivement, sur les fils de deux bus 12 et 13 sur la base de l'adresse du pixel concerné dans le réseau 1. Les bus 12 et 13 sont connectés à un dispositif d'utilisation 14 permettant d'exploiter les informations encodées.

Des circuits de traitement pouvant être utilisés pour le circuit 11 ont été décrits dans un article de Mortara et al., IEEE Journal of Solid State Circuits, Vol 30, n° 6, juin 1995 et dans le brevet français n° 2 778 994 au nom du Demandeur. On n'en donnera donc pas de description ici.

On notera que les caractéristiques du signal r en forme de rampe fourni par le générateur 8 peuvent être réglables au moyen d'un circuit de commande 15. On reviendra ultérieurement sur ce point.

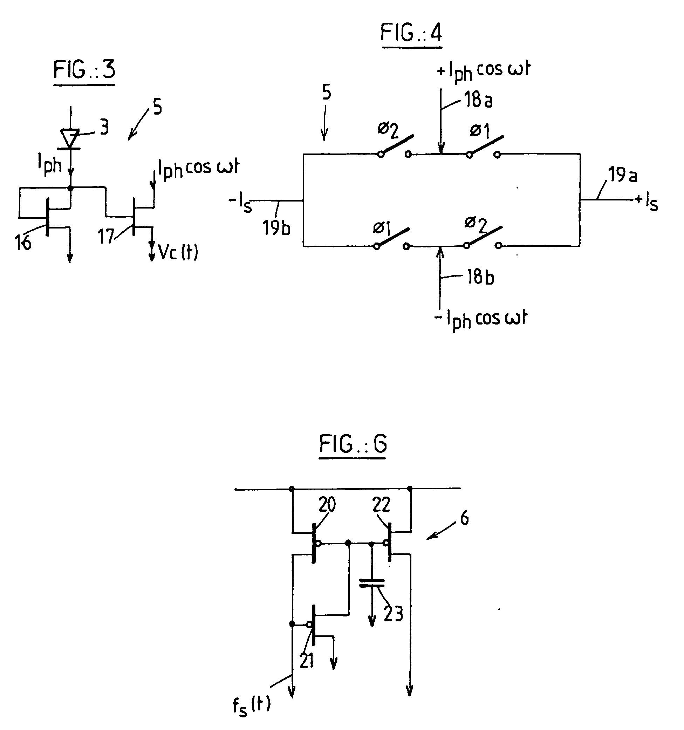

Les figures 3 et 4 illustrent un exemple de réalisation du bloc de conversion 5 de chaque pixel 2. L'élément photosensible 3 est de préférence une diode connectée à deux transistors 16 et 17. Le transistor 17 est branché sur une tension $V_c(t)$, ou $V_s(t)$, proportionnelle à Icosωtl, ou à Isinωtl, qui est ainsi modulée par le photocourant $I_{ph}$ parcourant le transistor 16. Ce montage constitue ce que l'on peut appeler un "multiplicateur à un quadrant".

Pour obtenir un courant modulé complet sur les quatre quadrants, on peut utiliser le montage de la figure 4. Les valeurs positive et négative du courant $I_{ph}$.Icosωtl (ou $I_{ph}$.Isinωtl) parcourant le transistor 17 sont respectivement appliquées à deux bornes 18a et 18b auxquelles sont raccordées deux paires d'interrupteurs 01 et 02 connectés, par ailleurs, à deux bornes de sortie 19a et 19b sur lesquelles apparaissent, respectivement, les valeurs positive + $I_s$ et négative - $I_s$ du courant de sortie.

Pendant la phase du courant $|_{ph}|$cosωtl, les interrupteurs Ø1 sont activés pour établir la connexion entre les bornes 18a et 19a et entre les bornes 18b et 19b. Pendant la phase négative, ce sont les interrupteurs Ø2 qui établissent la connexion entre les bornes 18a et 19b et entre les bornes 18b et 19a. Les interrupteurs Ø1 et Ø2 sont commandés par le signal sinusoïdal fourni au réseau 1. Bien entendu, le montage de la figure 4 peut fonctionner mutatis mutandis avec la valeur de sinus du courant modulé. Les répliques positive et négative des courants modulés peuvent être obtenues facilement par un miroir inverseur de courant connu en soi.

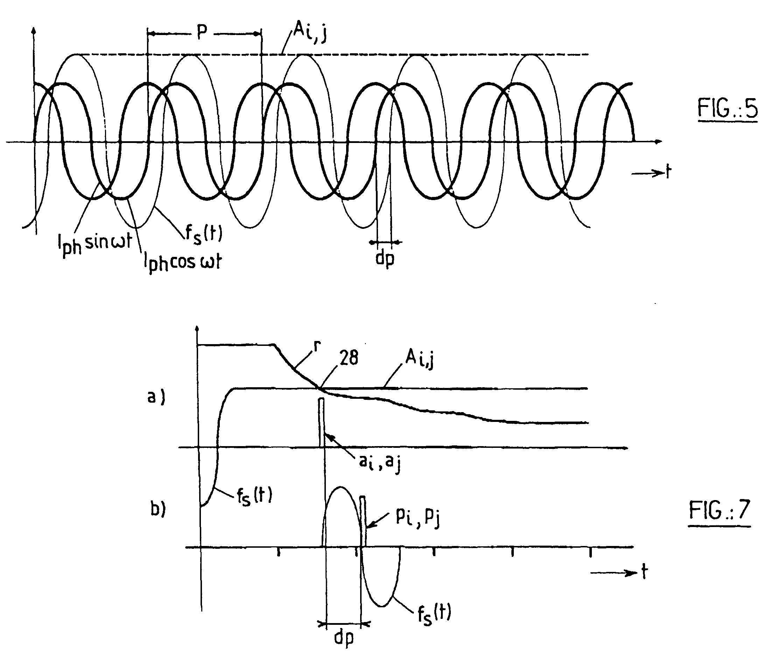

La figure 5 représente les formes d'ondes apparaissant à la sortie du bloc de traitement 5 de chaque pixel 2, le trait en pointillés représentant le niveau de l'amplitude maximale de la fonction $f_s(t)$. P désigne la période des fonctions de filtrage locales $I_{ph}$sinωt et $I_{ph}$cosωt.

Un exemple de réalisation du bloc 6 de maintien et de détection de crête est représenté sur la figure 6. Il comprend un miroir de courant composé des transistors 20, 21 et 22. La branche du miroir de courant, comprenant les transistors 20 et 21, est parcourue par la partie positive du courant correspondant à la fonction $f_s(t)$. La valeur maximale du courant du miroir est disponible sur le transistor 22 et est maintenue sous forme d'une tension par une capacité 23 qui peut être intégrée en tant que composant ou être formée par la capacité parasite à l'endroit correspondant du montage.

La valeur du courant disponible sur le transistor 22 est appliquée à l'additionneur 7 (figure 1) où elle est sommée avec le signal r en forme de rampe provenant du générateur de rampe 8, comme décrit ci-dessus.

La figure 7 illustre graphiquement le fonctionnement d'un pixel 2 du réseau photosensible selon l'invention.

Les courbes de la partie a) de cette figure montrent une demi-alternance de la fonction $f_s(t)$ ainsi que la valeur de son amplitude maximale $A_{i, j}$, qui est maintenue dans le bloc 6. On voit que, lorsque le signal en forme de rampe r devient égal à l'amplitude maximale au point 28, une paire d'impulsions d'amplitude $a_i$, $a_j$ est produite sur les deux sorties du bloc de communication 10a.

On voit également que l'alternance de la fonction $f_s(t)$, suivant immédiatement l'apparition des impulsions $a_i$, $a_j$, est soumise à une détection de passage par zéro dans le bloc 9b ce qui donne naissance à la paire d'impulsions de phase $p_i$, $p_j$ à la sortie du bloc 10b. Le déphasage correspondant à la direction du vecteur local pour le pixel i, j est indiqué par dp sur les figures 5 et 7.

Le signal r en forme de rampe produit par le générateur 8 est une fonction décroissante monotone qui ne doit pas nécessairement être linéaire. Il peut, en effet, être avantageux de modifier l'allure de cette fonction pendant sa décroissante afin de pouvoir réguler la densité des événements (impulsions). Plus sa pente sera raide et plus grande sera cette densité. Le circuit de régulation 15, nécessaire à cet effet, peut être réalisé sans difficulté par les spécialistes du domaine technique considéré et ne sera donc pas décrit ici.

Contrairement aux dispositifs d'analyse d'images de la technique antérieure dans lesquels les informations sont disponibles potentiellement en synchronisme, le procédé selon l'invention permet d'encoder de façon asynchrone les gradients locaux d'information représentés par leurs vecteurs. Les sorties engendrées par le réseau de pixels n'ont ainsi à subir aucun arbitrage, car chaque pixel du réseau fournit son information de gradient de façon indépendante dans le temps par rapport aux autres pixels du réseau. Ainsi, un premier événement, représenté par les impulsions d'amplitude et de phase provenant d'un pixel donné, aura l'amplitude du gradient la plus grande.

Le procédé de l'invention peut être mis en oeuvre selon deux modes spécifiques. Dans un premier de ces modes on peut présenter au circuit d'exploitation 14 tous les événements (impulsions) fournis par le réseau 1. En revanche, dans le second mode de mise en oeuvre on ne considérera que les événements provoqués par des pixels 2 dont la direction du gradient se trouve dans une plage prédéterminée. Ce deuxième mode peut être mis en oeuvre en appliquant des fenêtres temporelles aux impulsions engendrées. Par exemple, toutes les impulsions de phase tombant à l'intérieur d'une fenêtre temporelle donnée pourront être prises en compte et les autres être rejetées. On pourra appliquer une autre fenêtre temporelle aux impulsions d'amplitude et ainsi dégager des caractéristiques particulières de l'image étudiée. Le procédé de l'invention présente donc une grande flexibilité.

**Revendications**

1. Procédé d'encodage temporel d'une pluralité d'informations pouvant être représentées par des vecteurs (V) ayant chacun une magnitude (N) et une orientation ($\alpha$) données, lesdites informations étant relevées par une pluralité de capteurs (2), **caractérisé en ce qu'**il consiste:

   - à transformer chaque information relevée en un signal sinusoïdal ($f_s(t)$) dont l'amplitude maximale représente la magnitude (N) du vecteur (V) qui représente cette information et dont la phase représente l'angle ($\alpha$) de ce vecteur (V);
   - à détecter ladite amplitude maximale ($A_{i,\,j}$);
   - à comparer cette amplitude maximale à un signal (r) en forme de rampe décroissante et à engendrer une première impulsion ($a_i$, $a_j$), lorsque le signal en forme de rampe (r) est égal à l'amplitude maximale;
   - à engendrer une seconde impulsion ($p_i$, $p_j$), lorsque ladite fonction sinusoïdale ($f_s(t)$) passe par une valeur nulle après la génération de ladite première impulsion;
   - lesdites première et seconde impulsions ($a_i$, $a_j$, $p_i$, $p_j$) formant par leur position dans le temps un encodage temporel de la magnitude (N) et de l'angle ($\alpha$) dudit vecteur (V) et donc de ladite information.

2. Procédé d'encodage selon la revendication 1, **caractérisé en ce que** ladite pluralité d'informations est fournie par des capteurs (2) agencés en réseau (1), et ledit signal sinusoïdal ($f_s(t)$) est le résultat de l'information d'un capteur (i,j) combinée aux informations des capteurs voisins (i-1, i+1, j-1, j+1) modulées par une même fonction sinusoïdale ($V_c(t)$) par rapport au temps dont la phase constitue la pondération des capteurs voisins dans ladite combinaison.

3. Procédé d'encodage selon la revendication 2, **caractérisé en ce que** la pondération est déterminée en fonction de l'emplacement des capteurs voisins (i-1, i+1, j-1, j+1) par rapport au capteur considéré (i, j).

4. Procédé d'encodage selon l'une quelconque des revendications 2 et 3, **caractérisé en ce que** lesdits capteurs (2) font partie d'un réseau matriciel (1).

5. Procédé d'encodage suivant l'une quelconque des revendications 1 à 4, **caractérisé en ce que** lesdits capteurs (2) comprennent des éléments photosensibles (3).

6. Procédé d'encodage selon la revendication 3, **caractérisé en ce que** la pluralité des premières et secondes impulsions (ai, aj, pi, pj) sont présentées simultanément sur les bords dudit réseau (1) et codées sur un bus commun (12) pour l'amplitude et sur un bus commun (13) pour la phase, la répartition desdites impulsions sur les lignes de leur bus (12, 13) correspondant à l'adresse dans ledit réseau (1) du capteur (2) ayant donné naissance à ces impulsions et leur apparition dans le temps représentant respectivement la magnitude (N) et l'angle ($\alpha$) du vecteur (V) concerné.

7. Procédé suivant l'une quelconque des revendications précédentes, **caractérisé en ce qu'**il consiste à modifier la pente dudit signal (r) en forme de rampe en fonction de l'apparition dans le temps desdites premières et secondes impulsions (ai, aj, pi, pj) provenant des différents capteurs (2).

**Patentansprüche**

1. Verfahren zum zeitlichen Kodieren einer Anzahl von Informationen, die durch Vektoren (V) dargestellt werden können, welche jeweils einen vorgegebenen Betrag (N) und eine vorgegebene Richtung ($\alpha$) haben, wobei die Informationen von einer Anzahl von Aufnehmern (2) erfasst werden, **dadurch gekennzeichnet, dass** es aus den folgenden Schritten besteht:

   - Umformen jeder erfassten Information in ein sinusförmiges Signal ($f_s(t)$), dessen maximale Amplitude den Betrag (N) des diese Information darstellenden Vektors (V) darstellt und dessen Phase den Winkel ($\alpha$) dieses Vektors (V) darstellt;

- Detektieren der maximalen Amplitude ($A_{i,j}$);
- Vergleichen dieser maximalen Amplitude mit einem Signal (r) in Form einer abfallenden Rampe und Erzeugen eines ersten Impulses ($a_i$, $a_j$), wenn das Signal in Rampenform (r) gleich der maximalen Amplitude ist;
- Erzeugen eines zweiten Impulses ($p_i$, $p_j$), wenn die sinusförmige Funktion ($f_s(t)$) nach dem Erzeugen des ersten Impulses einen Nullwert durchläuft;
- wobei der erste und zweite Impuls ($a_i$, $a_j$, $p_i$, $p_j$) durch ihre Lage in der Zeit eine zeitliche Kodierung des Betrages (N) und des Winkels ($\alpha$) des Vektors (V) und somit der Information bilden.

2. Verfahren zum Kodieren nach Anspruch 1, **dadurch gekennzeichnet, dass** die Anzahl von Informationen von Aufnehmern (2) geliefert wird, die in einem Netz (1) angeordnet sind, und das sinusförmige Signal ($f_s(t)$) das Ergebnis der Information eines Aufnehmers (i, j) kombiniert mit Informationen der benachbarten Aufnehmem (i-1, i+1, j-1, j+1) ist, welche durch eine gleiche sinusförmige Funktion ($V_c(t)$) bezüglich der Zeit moduliert sind, deren Phase die Wichtung der benachbarten Aufnehmer in der Kombination bildet.

3. Verfahren zum Kodieren nach Anspruch 2, **dadurch gekennzeichnet, dass** die Wichtung als Funktion der Stelle der benachbarten Aufnehmer (i-1, i+1, j-1, j+1) bezüglich des betrachteten Aufnehmers (i, j) bestimmt wird.

4. Verfahren zum Kodieren nach einem der Ansprüche 2 und 3, **dadurch gekennzeichnet, dass** die Aufnehmer (2) Teil eines matrixförmigen Netzes (1) bilden.

5. Verfahren zum Kodieren nach einem der Ansprüche 1 bis 4, **dadurch gekennzeichnet, dass** die Aufnehmer (2) fotoempfindliche Elemente (3) aufweisen.

6. Verfahren zum Kodieren nach Anspruch 3, **dadurch gekennzeichnet, dass** die Anzahl von ersten und zweiten Impulsen (ai, aj, pi, pj) gleichzeitig an den Rändern des Netzes (1) dargestellt und auf einem gemeinsamen Bus (12) für die Amplitude und auf einem gemeinsamen Bus (13) für die Phase kodiert sind, wobei die Verteilung der Impulse auf den Leitungen ihres Buses (12, 13) der Adresse in dem Netz (1) des Aufnehmers (2), welche diese Impulse hervorgerufen hat, entspricht und ihr Auftreten in der Zeit den Betrag (N) bzw. den Winkel ($\alpha$) des betreffenden Vektors (V) darstellt.

7. Verfahren nach einem der vorhergehenden Ansprüche, **dadurch gekennzeichnet, dass** es darin besteht, die Steigung des Signals (r) in Rampenform als Funktion des Auftretens in der Zeit der ersten und zweiten Impulse (ai, aj, pi, pj), die von verschiedenen Aufnehmern (2) kommen, zu modifizieren.

**Claims**

1. A method of temporally encoding a plurality of items of information that may be represented by vectors (V) each having a given magnitude (N) and a given orientation ($\alpha$), said information being gathered by a plurality of sensors (2), **characterized in that** it consists in:

- transforming each gathered item of information into a sinusoidal signal ($f_s(t)$) whose maximum amplitude represents the magnitude (N) of the vector (V) that represents that item of information and whose phase represents the angle ($\alpha$) of that vector (V);
- detecting said maximum amplitude ($A_{i,j}$);
- comparing that maximum amplitude to a decreasing ramp signal (r) and generating a first pulse ($a_i$, $a_j$) if the ramp signal (r) is equal to the maximum amplitude;
- generating a second pulse ($p_i$, $p_j$) if said sinusoidal function ($f_s(t)$) crosses a null value after the generation of said first pulse;
- said first and second pulses ($a_i$, $a_j$, $p_i$, $p_j$) forming by their position in time a temporal encoding of the magnitude (N) and of the angle ($\alpha$) of said vector (V) and therefore of said item of information.

2. A coding method according to claim 1, **characterized in that** said plurality of information items is provided by sensors (2) arranged in an array (1) and said sinusoidal signal ($f_s(t)$) is the result of combining the information item from one sensor (i, j) with the information items from adjacent sensors (i-1, i+1, j-1, j+1) modulated by the same sinusoidal function ($V_c(t)$) with respect to time whose phase constitutes the weighting of the adjacent sensors in said combination.

3. A coding method according to claim 2, **characterized in that** said weighting is determined as a function of the location of the adjacent sensors (i-1, i+1, j-1, j+1) relative to the sensor (i, j) concerned.

4. A coding method according to either claim 2 or claim 3, **characterized in that** said sensors (2) form part of a matrix array (1).

5. A coding method according to any of claims 1 to 4, **characterized in that** said sensors (2) comprise photosensitive elements (3).

6. A coding method according to claim 3, **characterized in that** the plurality of the first and second pulses (ai, aj, pi, pj) are presented simultaneously to the edges of said array (1) and coded on one common bus (12) for the amplitude and on one common bus (13) for the phase, the distribution of said pulses over the lines of their bus (12, 13) corresponding to the address in said array (1) of the sensor (2) that gave rise to those pulses and their occurrence in time respectively representing the magnitude (N) and the angle ($\alpha$) of the vector (V) concerned.

7. Method according to any preceding claim, **characterized in that** it consists in modifying the slope of said ramp signal (r) as a function of the occurrence in time of said first and second pulses (ai, aj, pi, pj) coming from different sensors (2).

FIG.:1A

FIG.:1

FIG.:2

FIG.: 3

FIG.: 4

$I_{ph}$

$I_{ph} \cos \omega t$

$+I_{ph} \cos \omega t$
18 a

5

5

3

16

17

$Vc(t)$

ø2

ø1

$-I_s$

19b

ø1

ø2

19 a

$+I_s$

18 b

$-I_{ph} \cos \omega t$

FIG.: 6

20

22

6

23

21

$f_s(t)$

FIG.:5

P

$A_{i,j}$

$I_{ph}\sin\omega t$

$f_S(t)$

$I_{ph}\cos\omega t$

dp

t

a)

r

28

$A_{i,j}$

$a_i, a_j$

b)

$f_S(t)$

$p_i, p_j$

$f_S(t)$

dp

t

FIG.:7

EP 1 150 250 B1